# EUROPÄISCHE PATENTANMELDUNG

(11) **EP 4 785 781 A1**
(43) Veröffentlichungstag der Anmeldung: **05.08.2026**
(21) Anmeldenummer: 25155643.7
(22) Anmeldetag: 03.02.2025
(51) Int. Cl.: A01J 25/11, A01J 27/04, A01J 25/12, A01J 25/15

(54) **VORRICHTUNG ZUR KÄSEHERSTELLUNG**

(71) Anmelder: Kalt Maschinenbau AG, 9604 Lütisburg (CH)
(72) Erfinder: GRÜNINGER, Siegfried, 9011 St. Gallen (CH); EICHER, Yves, 8587 Oberaach (CH); VIDALE, Romeo, 8556 Wigoltingen (CH)
(74) Vertreter: Wenzel Nemetzade Warthmüller Patentanwälte Part mbB

(57) **Zusammenfassung**

Vorrichtung (1) zur Käseherstellung mit einer Käsebruchpressvorrichtung (2) zum flüssigkeitsverringernden Pressen von Käsebruch, mit einer Ausgabeeinrichtung (3) zur Ausgabe von gepresstem Käsebruch aus der Käsebruchpressvorrichtung und mit einem Cheddarmodul (4) zur Aufnahme von gepresstem Käsebruch von der Ausgabeeinrichtung.

## Beschreibung

Die vorliegende Erfindung betrifft eine Vorrichtung zur Käseherstellung. Ebenso betrifft die vorliegende Erfindung ein Cheddarmodul zur Verarbeitung von gepresstem Käsebruch sowie auch einen Nachrüstsatz für eine Käsebruchpressvorrichtung. Schließlich betrifft die Erfindung auch ein Verfahren zur Käseherstellung, insbesondere mit einer solchen Vorrichtung zur Käseherstellung.

Bei der Herstellung von Käse wird Käsebruch in einer Käsebruchpressvorrichtung gepresst, insbesondere um überschüssige Flüssigkeit aus dem Käsebruch zu pressen. Bei der Herstellung von Cheddar wir der gepresste Käsebruch manuell zerkleinert und gesalzen. Die manuelle Bearbeitung erfolgt in der Regel auf gesonderten Cheddar-Bearbeitungstischen. Anschließend kann der zerkleinerte und gesalzene Käsebruch in Formen abgefüllt und fertiggepresst werden.

Das manuelle Zerkleinern erfordert jedoch einen hohen Personaleinsatz und ist mit starker körperlicher Belastung verbunden, insbesondere wegen des hohen Widerstands des gepressten Käsebruchs gegen das Zerkleinern. Bei industrieller Herstellung wird die Produktivität dadurch beeinträchtigt. Zudem ist mit dem Einsatz gesonderter Cheddar-Bearbeitungstische für die manuelle Käsebruchbearbeitung ein hoher Platzbedarf erforderlich.

Vor dem oben dargelegten Hintergrund bestand die Aufgabe der Erfindung darin, die Herstellung von Cheddar, bei der gepresster Käsebruch zerkleinert wird, zu vereinfachen und gleichzeitig mit nur geringem Platzbedarf zu ermöglichen.

Diese Aufgabe ist durch eine Vorrichtung zur Käseherstellung gemäß Anspruch 1 gelöst worden. In Bezug auf ein Cheddarmodul ist diese Aufgabe durch den

Gegenstand von Anspruch 14 gelöst worden. In Bezug auf ein Verfahren zur Käseherstellung ist diese Aufgabe durch Anspruch 15 gelöst worden. Vorteilhafte Weiterbildungen sind in den jeweiligen Unteransprüchen angegeben und werden nachfolgend erläutert.

Eine erfindungsgemäße Vorrichtung zur Käseherstellung weist eine Käsebruchpressvorrichtung zum flüssigkeitsverringernden Pressen von Käsebruch und eine Ausgabeeinrichtung zur Ausgabe von gepresstem Käsebruch aus der Käsebruchpressvorrichtung auf. Ferner weist die Vorrichtung zur Käseherstellung erfindungsgemäß ein Cheddarmodul zur Aufnahme von gepresstem Käsebruch von der Ausgabeeinrichtung auf.

Durch die Ausgabe des gepressten Käsebruchs mit der Ausgabeeinrichtung an das Cheddarmodul, kann die weitere Verarbeitung des gepressten Käsebruchs durch das Cheddarmodul erfolgen. Eine personalintensive beziehungsweise handarbeitsintensive Bearbeitung des gepressten Käsebruchs kann hierdurch nennenswert verringert oder vollständig vermieden werden. Hierdurch kann der Einsatz von gesonderten Cheddar-Bearbeitungstischen vollständig entfallen und es lässt sich eine Cheddar-Produktion mit verhältnismäßig geringem Platzbedarf realisieren. Gleichzeitig kann durch den Einsatz eines gesonderten Cheddarmoduls eine hohe Produktivität in der Weiterverarbeitung des gepressten Käsebruchs, der von der Ausgabeeinrichtung an das Cheddarmodul ausgegebenen wird, realisiert werden.

Die erfindungsgemäße Vorrichtung zur Käseherstellung kann durch verschiedene, jeweils für sich vorteilhafte und, sofern nicht anders ausgeführt, beliebig miteinander kombinierbare Ausgestaltungen weiter verbessert werden. Auf die vorteilhaften Ausführungsformen und auch auf die mit ihnen verbundenen Vorteile wird im Folgenden näher eingegangen.

Gemäß einer ersten Ausführungsform der Vorrichtung kann das Cheddarmodul an der Käsebruchpressvorrichtung angeordnet sein. Insbesondere kann das Cheddarmodul an einem stirnseitigen Ende oder an einem Längsende der Käsebruchpressvorrichtung angeordnet sein. Ferner kann das Cheddarmodul oder zumindest ein Teil des Cheddarmoduls fest und/oder beweglich geführt an der Käsebruchpressvorrichtung angeordnet und/oder montiert sein.

Ein Vorteil einer solchen Ausführungsform kann sein, dass die Käsebruchpressvorrichtung von anderen Seiten, etwa eine laterale Seite oder Längsseite, frei zugänglich sein kann, auch wenn das Cheddarmodul an der Käsebruchpressvorrichtung angeordnet ist. Alternativ oder zusätzlich kann die Anordnung des Cheddarmoduls an dem stirnseitigen Ende oder an dem Längsende der Käsebruchpressvorrichtung weniger Platz für die mit dem Cheddarmodul versehene Käsebruchpressvorrichtung erfordern, als bei einer anderen Anordnung des Cheddarmoduls. Durch eine feste und/oder fest und/oder beweglich geführte Anordnung lassen sich genau definierte Relativpositionen zwischen dem Cheddarmoduls und der Käsebruchpressvorrichtung sicherstellen.

Gemäß einer weiteren Ausführungsform der Vorrichtung kann das Cheddarmodul oder zumindest ein Teil des Cheddarmoduls beweglich entlang einer Höhenrichtung an der Käsebruchpressvorrichtung angeordnet sein. Somit kann das Cheddarmodul oder zumindest ein Teil des Cheddarmoduls oder auch mehrere Teile des Cheddarmoduls in unterschiedliche Funktionsstellungen entlang einer Höhenrichtung bewegt werden.

Gemäß einer weiteren Ausführungsform der Vorrichtung kann das Cheddarmodul eine Käsebruchzerkleinerungseinrichtung zur Zerkleinerung von gepresstem Käsebruch aufweisen. Insbesondre kann die Käsebruchzerkleinerungseinrichtung als Schredder-Vorrichtung ausgebildet sein.

Ein Vorteil einer solchen Ausführungsform kann sein, dass der gepresste Käsebruch gleich im Cheddarmodul zerkleinert werden kann. Ist die Käsebruchzerkleinerungseinrichtung als Schredder-Vorrichtung ausgebildet, kann der gepresste Käsebruch besonders günstig und/oder effizient beziehungsweise zuverlässig durch Schreddern zerkleinert werden.

Gemäß einer weiteren Ausführungsform der Vorrichtung kann das Cheddarmodul eine Mischeinrichtung zum Mischen von zerkleinertem Käsebruch aufweisen. Insbesondere kann die Mischeinrichtung der Käsebruchzerkleinerungseinrichtung zerkleinerten Käsebruch aufnehmend nachgeordnet sein. Alternativ oder zusätzlich kann das Cheddarmodul als Schredder-Mischvorrichtung ausgebildet sein. Eine Schredder-Mischvorrichtung kann dazu ausgebildet sein, den Käsebruch zu zerkleinern und mit einem Zusatz, etwa Salz, zu vermischen. Zum Beispiel kann ein Werkzeug der Schredder-Mischvorrichtung den Käsebruch gleichzeitig oder nacheinander zerkleinern und mischen.

Ein Vorteil einer solchen Ausführungsform kann sein, dass dem Käsebruch einfach Zusätze, etwa Gewürze, Kräuter und/oder Salz, beigemengt werden können, wobei die Zusätze gleichmäßig im Käsebruch verteilt werden können.

Gemäß einer weiteren Ausführungsform der Vorrichtung kann die Vorrichtung eine Salzereinrichtung für die Zuführung von Salz zu aufgenommenem Käsebruch aufweisen. Die Salzereinrichtung kann der Käsebruchzerkleinerungseinrichtung und/oder der Mischeinrichtung Salz zuführend vorgeordnet sein.

Ein Vorteil einer solchen Ausführungsform kann sein, dass Salz oder auch andere Zusätze oder Zusatzmischungen, insbesondere mit mehreren Zusätzen, dem Käsebruch automatisch zugeführt werden können. Ist die Salzereinrichtung der Käsebruchzerkleinerungseinrichtung und/oder der Mischeinrichtung Salz zuführend vorgeordnet, können das Salz und/oder die anderen Zusätze und/oder die Zusatzmischung dem Käsebruch nicht nur zugeführt, sondern auch effizient beigemengt oder untergemengt werden, insbesondere in einer verhältnismäßig großen räumlichen Verteilung im Käsebruch.

Gemäß einer weiteren Ausführungsform der Vorrichtung kann die Mischeinrichtung im Betrieb des Cheddarmoduls entlang der Schwerkraftrichtung oder Vertikalrichtung zumindest abschnittsweise hinter, also in Betriebsstellung unterhalb, der Käsebruchzerkleinerungseinrichtung und/oder der Salzereinrichtung angeordnet sein.

Ein Vorteil einer solchen Ausführungsform kann sein, dass zerkleinerter Käsebruch und/oder Salz beziehungswiese andere Zusätze oder Zusatzmischungen somit mit geringem Aufwand in die Mischeinrichtung gegeben werden können, insbesondere unter Nutzung der Schwerkraft in die Mischeinrichtung gegeben und/oder geleitet werden können.

Gemäß einer weiteren Ausführungsform der Vorrichtung kann das Cheddarmodul die Salzereinrichtung aufweisen. Die Mischeinrichtung kann der Salzereinrichtung Salz empfangend direkt nachgeordnet sein. Die Salzereinrichtung kann zur Salzzuführung in die Mischeinrichtung über oder durch die Käsebruchzerkleinerungseinrichtung ausgebildet und/oder angeordnet sein.

Ein Vorteil einer solchen Ausführungsform kann sein, dass ein die Salzeinrichtung aufweisendes Cheddarmodul einfacher und womöglich sogar einstückig handhabbar montiert werden kann. Ist die Mischeinrichtung der Salzereinrichtung ferner Salz empfangend direkt nachgeordnet, kann dies Platz sparen und den Wartungsaufwand verringern, wenn Salz und/oder anderer Zusätze von der Salzereinrichtung direkt oder über die Käsebruchzerkleinerungseinrichtung in die Mischeinrichtung zuführbar sind. Ist die Salzereinrichtung zur Salzzuführung in die Mischeinrichtung über die Käsebruchzerkleinerungseinrichtung ausgebildet und/oder angeordnet, können Salz und/oder andere Zusätze bereits bei der Zerkleinerung des gepressten Käsebruchs grob dem Käsebruch beigemischt werden, sodass die weitere Vermischung in der Mischeinrichtung weniger Zeit benötigt.

Gemäß einer weiteren Ausführungsform der Vorrichtung kann die Käsebruchzerkleinerungseinrichtung eine Aufnahmeöffnung zur Aufnahme des gepressten Käsebruchs und eine Ausgebeöffnung für den zerkleinerten Käsebruch aufweisen. Die Käsebruchzerkleinerungseinrichtung kann zusätzlich oder alternativ ein Käsebruchzerkleinerungswerkzeug aufweisen. Das Käsebruchzerkleinerungswerkzeug kann wenigstens abschnittsweise zwischen der Aufnahmeöffnung und der Ausgebeöffnung angeordnet sein.

Ein Vorteil einer solchen Ausführungsform kann sein, dass Käsebruch einfach und mit hoher Zuverlässigkeit auf seinem Weg von der Aufnahmeöffnung zur der Ausgebeöffnung zerkleinerbar ist.

Gemäß einer weiteren Ausführungsform der Vorrichtung kann das Käsebruchzerkleinerungswerkzeug wenigstens eine Schredderwalze, ein Schredderwalzenpaar, eine Stachelwalze, ein Stachelwalzenpaar, eine Messerwalze, ein Messerwalzenpaar und/oder ein Messerschneidwerk mit einer Rotationsklinge und/oder einer statischen Klinge und/oder einem Messerraster aufweisen.

Ein Vorteil einer solchen Ausführungsform kann sein, dass das Käsebruchzerkleinerungswerkzeug abhängig von der gewünschten Zerkleinerung des gepressten gewählt und gleichzeitig eine besonders zuverlässige Zerkleinerung des Käsebruchs gewährleistet werden kann.

Gemäß einer weiteren Ausführungsform der Vorrichtung kann die Mischeinrichtung eine Mischtrommel und ein Mischwerkzeug aufweisen. Die Mischtrommel und das Mischwerkzeug können um eine gemeinsame Rotationsachse rotierbar sein. Ein Vorteil einer solchen Ausführungsform kann sein, dass die rotierende Mischtrommel und/oder das rotierende Mischwerkzeug Zusätze wie Salz oder andere Zusätze effizient gleichmäßig in den zerkleinerten Käsebruch einmischen können, bei gleichzeitig kompaktem Vorrichtungsaufbau. Alternativ können die Mischtrommel und das Mischwerkzeug um zueinander versetzte oder geneigte Rotationsachsen rotierbar sein.

Gemäß einer weiteren Ausführungsform der Vorrichtung können die Mischtrommel und das Mischwerkzeug unabhängig voneinander um die jeweilige Rotationsachse, insbesondere um eine gemeinsame Rotationsachse, rotierbar sein. Ein Vorteil einer solchen Ausführungsform kann sein, dass die Mischtrommel und das Mischwerkzeug unabhängig voneinander unterschiedliche funktionale Erfordernisse erfüllend rotiert werden können.

Gemäß einer weiteren Ausführungsform der Vorrichtung kann die Mischtrommel eine Öffnung aufweisen. Das Cheddarmodul kann dazu ausgebildet sein, die Mischtrommel um die Rotationsachse in eine Mehrzahl unterschiedlicher Betriebsstellungen zu drehen. Insbesondere kann die Mischtrommel wahlweise in eine Käsebruchaufnahmeposition, in der die Öffnung zur Käsebruchzerkleinerungseinrichtung weist, und/oder in eine Salzaufnahmeposition, in der die Öffnung zur Salzereinrichtung weist oder zur Aufnahme von Salz von der Salzereinrichtung orientiert ist, und/oder in eine Käsebruchabgabeposition, in der die Öffnung in die Schwerkraftrichtung weist, angeordnet und/oder positioniert werden.

Ein Vorteil einer solchen Ausführungsform kann sein, dass die Mischtrommel mit geringem konstruktiven Aufwand und gleichzeitig robust, insbesondere mit nur einer einzigen Öffnung, ausgestaltet sein kann, wobei für die Öffnung kein Verschlussmechanismus oder Deckel benötigt wird. In der Mischtrommel enthaltener zerkleinerter Käsebruch mit Zusatz kann aufgrund der vorgegebenen Positionen einfach und sicher innerhalb der Mischtrommel gehalten werden. Ein ungewolltes Herausfallen aus der Mischtrommel kann vermieden werden.

Gemäß einer weiteren Ausführungsform der Vorrichtung kann die Käsebruchpressvorrichtung eine in der Draufsicht offene Wanne und/oder einen Presskopf mit einer Vielzahl von Pressstempeln zum Pressen der Käserohmasse aufweisen. Insbesondere können die Pressstempel auf in der Wanne angeordneten Käseformen ausgerichtet sein.

Ein Vorteil einer solchen Ausführungsform kann sein, dass Käsebruch in einer der Käseformen nicht mit Käsebruch in einer anderen der Käseformen vermengt wird, sodass Käsebruch in jeder der Käseformen individuell handhabbar sein kann, beispielsweise um Käsebruch in unterschiedlichen Käseformen unterschiedlich zu behandeln oder um Chargen leichter nachverfolgen zu können.

Die Käsebruchpressvorrichtung kann als Kassettenpresse, Einschwemmpresse, Tunnelpresse und/oder Wendepresse ausgebildet sein. Ein solche Käsebruchpressvorrichtung kann neben der Herstellung von Cheddarkäse in besonders vorteilhafter Weise auch für die Herstellung anderer Käsesorten eingesetzt werden. Es ergibt sich damit eine besonders hohe Einsatzflexibilität der Käsebruchpressvorrichtung und damit auch der gesamten Vorrichtung.

Gemäß einer weiteren Ausführungsform der Vorrichtung kann die Käsebruchpressvorrichtung eine Mehrzahl von Käseformen aufweisen. Die Käseformen können als Käsebruchpressbehälter ausgebildet sein. Die Käseformen können ferner in Kassettenformen, insbesondere mit mehreren Käseformen, ausgebildet und/oder angeordnet sein. Die Käseformen können in mehreren Aufnahmekassetten angeordnet und/oder aufgenommen sein. Die Kassettenpresse kann weiterhin eine Mehrzahl von Kassettenformen und/oder Aufnahmekassetten für Käseformen aufweisen, insbesondere mit jeweils mehreren Käseformen und/oder Käsebruchpressbehältern.

Ein Vorteil einer solchen Ausführungsform kann sein, dass ausgewählte Käseformen gemeinsam handhabbar sein können, wodurch die Käseformen effizienter und mit größerer Betriebssicherheit gehandhabt werden können.

Gemäß einer weiteren Ausführungsform der Vorrichtung kann die Ausgabeeinrichtung dazu ausgebildet sein, wenigstens eine Käseform und/oder eine Kassettenform und/oder eine Aufnahmekassette, insbesondere mit mehreren Käseformen, in der Schwerkraftrichtung zumindest abschnittsweise vor, also in Betriebsstellung der Vorrichtung über, dem Cheddarmodul anzuordnen und/oder den gepressten Käsebruch bevorzugt in die Käsebruchzerkleinerungseinrichtung auszuleeren, insbesondere durch eine Schwenkbewegung. Alternativ zur Schwenkbewegung können Käseformen eine öffenbare Seite, beispielswiese eine Vorderseite, eine Rückseite, eine laterale Seite oder eine Unterseite, aufweisen, durch deren Öffnung der Käsebruch ausgeleert wird.

Ein Vorteil einer solchen Ausführungsform kann sein, dass zu zerkleinernder Käsebruch einfach und effizient der Käsebruchzerkleinerungseinrichtung zuführbar ist. Zusätzliche Transportbehälter oder Transportvorrichtungen, die mit dem zu zerkleinernden Käsebruch in Kontakt kommen und aufwendig zu reinigen wären, lassen sich auf diese Weise vermeiden.

Gemäß einer weiteren Ausführungsform der Vorrichtung kann die Ausgabeeinrichtung dazu ausgebildet sein, eine Käseform und/oder eine Kassettenform und/oder eine Aufnahmekassette in der Schwerkraftrichtung zumindest abschnittsweise hinter, also in Betriebsstellung der Vorrichtung unter, dem Cheddarmodul anzuordnen, insbesondere um Käsebruch, nach dem der Käsebruch im Cheddarmodul verarbeitet wurde, wieder in der jeweiligen oder in einer Käseform und/oder Kassettenform und/oder Aufnahmekassette aufzunehmen und/oder in diese fallen zu lassen.

Ein Vorteil einer solchen Ausführungsform kann sein, dass der Käsebruch vor und nach dem Zerkleinern und dem optionalen Salzen in geeigneter Weise in einer Form gehalten werden kann, bevorzugt in derselben, womöglich individuellen Form angeordnet werden kann, sodass der Käsebruch mit nur geringem logistischem Aufwand auch betreffend etwaige Formen zerkleinert und/oder gesalzen werden kann.

Gemäß einer weiteren Ausführungsform der Vorrichtung kann die Ausgabeeinrichtung dazu ausgebildet sein, eine Käseform und/oder eine Kassettenform und/oder eine Aufnahmekassette nach dem Befüllen, insbesondere nach dem erneuten Befüllen, mit durch das Cheddarmodul bearbeiteten Käsebruch in der Käsebruchpressvorrichtung anzuordnen, insbesondere für ein erneutes Pressen des Käsebruchs und/oder für ein Fertigpressen des Käsebruchs.

Ein Vorteil einer solchen Ausführungsform kann sein, dass der jeweilige Käsebruch für eine erneute Anordnung in der Käsebruchpressvorrichtung geeignet aufgenommen ist und/oder gegebenenfalls in derselben, womöglich individuellen Form angeordnet wird, sodass dieser Käsebruch erneut gepresst werden kann und/oder dass Käsechargen besser nachverfolgbar sind.

Gemäß einer weiteren Ausführungsform der Vorrichtung kann eine Kassettenform und/oder eine Aufnahmekassette eine Mehrzahl von reihenförmig angeordneten Käseformen aufweisen. Eine Kassettenform und/oder eine Aufnahmekassette kann eine einzige Reihe von Käseformen aufweisen, insbesondere ausschließlich eine einzige Reihe von Käseformen. Die vorzugsweise als Kassettenpresse ausgebildete Käsebruchpressvorrichtung kann dazu ausgebildet sein, im Pressbetrieb in mehreren Käseformen gleichzeitig ein Pressen von Käsebruch vorzunehmen.

Ein Vorteil einer solchen Ausführungsform kann sein, dass die Kassettenpresse Käsebruch mit einem möglichst hohen Durchsatz und damit einem hohen Maß Produktivität pressen kann.

Gemäß einer weiteren Ausführungsform der Vorrichtung kann das Cheddarmodul eine Mehrzahl von Modulsegmenten aufweisen. Die Modulsegmente können reihenförmig angeordnet sein und/oder sich entlang einer Breite der Käsebruchpressvorrichtung und/oder entlang einer Wannenbreite der Käsebruchpressvorrichtung erstrecken. Die Modulsegmente können entsprechend einer Reihenanordnung von Käseformen, insbesondere einer Kassettenform, und/oder einer Aufnahmekassette ausgebildet und/oder angeordnet und/oder anordnenbar sein. Insbesondere kann die Anzahl der Modulsegmente und/oder der Abstand der Modulsegmente zueinander der Anzahl der Käseformen und/oder dem Abstand der Käseformen in einer Käseformreihe entsprechen.

Ein Vorteil einer solchen Ausführungsform kann sein, dass gepresster Käsebruch ganzer Käseformreihen gleichzeitig vom Cheddarmodul bearbeitbar ist, was die Handhabungslogistik der Käseformen in der Vorrichtung vereinfachen kann.

Gemäß einer weiteren Ausführungsform der Vorrichtung kann die Salzereinrichtung einen Salzbehälter aufweisen. Die Salzereinrichtung kann eine einem oder dem Salzbehälter Salz empfangend nachgeordnete Salzrutsche aufweisen. Die Salzereinrichtung, insbesondere der Salzbehälter und/oder die Salzrutsche gemeinsam, kann auf die Mischeinrichtung zu und/oder von dieser weg bewegbar sein, bevorzugt durch eine automatisierte Antriebseinrichtung.

Ein Vorteil einer solchen Ausführungsform kann sein, dass Salz und/oder andere Zusätze sicher nur dann dem Käsebruch zuführbar sind, wenn dies gewünscht ist. Gleichzeitig wird ein geringer Handhabungsaufwand sichergestellt.

Gemäß einer weiteren Ausführungsform der Vorrichtung kann zumindest eine weitere Käsebruchpressvorrichtung dem Cheddarmodul nachgeordnet sein. Beispielswiese kann dem Cheddarmodul eine Tunnelpresse nachgeordnet sein. Die weitere Käsebruchpressvorrichtung kann zum Pressen von durch das Cheddarmodul bearbeitetem Käsebruch ausgebildet und/oder angeordnet sein, bevorzugt zum Pressen von Käsebruch, der durch das Cheddarmodul zerkleinert und/oder gemischt und/oder mit Salz und/oder anderen Zusätzen versetzt ist und/oder anschließend wieder in Käseformen abgefüllt worden ist.

Ein Vorteil einer solchen Ausführungsform kann sein, dass von dem Cheddarmodul verarbeiteter Käsebruch der weiteren Käsebruchpressvorrichtung einfach zuführbar ist, um den Käsebruch dort mit anderen Pressparametern, etwa eine Presskraft oder eine Pressdauer, zu pressen als in der dem Cheddarmodul vorgeordneten Käsebruchpressvorrichtung. Ferner kann auf diese Weise ein Käseverarbeitungsdurchsatz insgesamt erhöht werden.

Gemäß einer weiteren Ausführungsform der Vorrichtung kann zumindest eine Fördereinrichtung, insbesondere ein Schneckenförderer, vorgesehen sein. Die Fördereinrichtung kann für die Weiterleitung des durch das Cheddarmodul verarbeiteten Käsebruchs vorgesehen sein. Alternativ oder zusätzlich kann die Fördereinrichtung für die Weiterleitung des durch das Cheddarmodul verarbeiteten Käsebruchs zu zumindest einer Weiterverarbeitungsvorrichtung für den durch das Cheddarmodul verarbeiteten Käsebruch, insbesondere zu einer Weiterverarbeitungsvorrichtung für das Portionieren und/oder die Formenabfüllung und/oder das Fertigpressen des Käsebruchs, vorgesehen sein.

Ein Vorteil einer solchen Ausführungsform kann sein, dass der Käsebruch nach der Verarbeitung im Cheddarmodul einfach und mit hoher Betriebssicherheit wegtransportierbar und/oder zumindest einer Weiterverarbeitungsvorrichtung zuführbar ist.

Ein weiterer unabhängiger Aspekt der vorliegenden Erfindung betrifft ein Cheddarmodul zur Verarbeitung von gepresstem Käsebruch. Das Cheddarmodul ist besonders vorteilhafter Weise für eine voranstehend beschriebene Vorrichtung zur Käseherstellung ausgebildet und/oder eingerichtet und/oder für eine Vorrichtung zur Käseherstellung mit einer Käsebruchpressvorrichtung zum flüssigkeitsverringernden Pressen von Käsebruch und mit einer Ausgabeeinrichtung zur Ausgabe von gepresstem Käsebruch aus der Käsebruchpressvorrichtung.

Ein erfindungsgemäßes Cheddarmodul kann eine Käsebruchzerkleinerungseinrichtung und/oder eine Mischeinrichtung zum Mischen von Käsebruch und/oder eine Salzereinrichtung für die Zuführung von Salz in aufgenommenen Käsebruch aufweisen. Zumindest die Käsebruchzerkleinerungseinrichtung kann zur Anordnung nachgeordnet einer Ausgabeeinrichtung für gepressten Käsebruch und/oder nachgeordnet an einer Käsebruchpressvorrichtung ausgebildet und/oder geeignet sein.

Ein weiterer Aspekt der vorliegenden Erfindung betrifft einen Nachrüstsatz für eine Käsebruchpressvorrichtung zum flüssigkeitsverringernden Pressen von Käsebruch. Der erfindungsgemäße Nachrüstsatz weist wenigstens ein erfindungsgemäßes Cheddarmodul, insbesondere ein voranstehend beschriebenes Cheddarmodul, auf.

Gemäß einer ersten Ausführungsform des Nachrüstsatzes kann der Nachrüstsatz eine Ausgabeeinrichtung zur Ausgabe von gepresstem Käsebruch an das Cheddarmodul aufweisen.

Ein Vorteil einer solchen Ausführungsform kann sein, dass auch eine schon vorhandene Käsebruchpressvorrichtung, die noch keine Ausgabeeinrichtung zur Ausgabe von gepresstem Käsebruch an das Cheddarmodul aufweist, mit dem Cheddarmodul betreibbar nachgerüstet werden kann.

Ein weiterer Aspekt der vorliegenden Erfindung betrifft ein Verfahren zur Käseherstellung, insbesondere mit einer voranstehend beschriebenen Vorrichtung zur Käseherstellung, bei dem mit einer Käsebruchpressvorrichtung ein flüssigkeitsverringerndes Pressen von Käsebruch erfolgt und bei dem gepresster Käsebruch mit einer Ausgabeeinrichtung, insbesondere einer automatisierten Ausgabeeinreichtung, aus der Käsebruchpressvorrichtung entnommen wird. Bei dem erfindungsgemäßen Verfahren wird der gepresste Käsebrach an ein Cheddarmodul ausgegeben und der Käsebruch wird durch das Cheddarmodul verarbeitet.

Gemäß einer ersten Ausführungsform des Verfahrens kann der durch das Cheddarmodul verarbeitete Käsebruch wieder in Käseformen aufgenommen und/oder in der Käsebruchpressvorrichtung oder in einer weiteren Käsebruchpressvorrichtung erneut gepresst werden. Beispielsweise kann der Käsebruch vor dem Zerkleinern und beispielswiese vor dem ersten Zerkleinern bis zu 30 Minuten, bis zu 25 Minuten, bis zu 20 Minuten, bis zu 15 Minuten, bis zu 10 Minuten oder bis zu 5 Minuten gepresst werden.

Nach der Bearbeitung des Käsebruchs und beispielswiese nach der ersten, zweiten oder dritten Bearbeitung des Käsebruchs durch das Cheddarmodul kann der Käsebruch bis zu 45 Minuten, bis zu 60 Minuten bis zu 75 Minuten, bis zu 90 Minuten, bis zu 120 Minuten, bis zu 150 Minuten, bis zu 180 Minuten oder bis zu 210 Minuten gepresst und/oder in einem finalen Pressschritt fertiggepresst werden.

Ein Vorteil einer derart bevorzugten Verfahrensführung kann sein, dass der Käsebruch zur gleichmäßigen Aufnahme von Zusätzen wie etwa Salz eine erste gewünschte Feuchtigkeit aufweisen und nach dem Zugeben von Zusätzen wie etwa Salz auf eine zweite gewünschte Feuchtigkeit und/oder Konsistenz gebracht werden kann. Die zweite gewünschte Feuchtigkeit kann niedriger sein als die erste gewünschte Feuchtigkeit. Ein Fertigpressen kann die Herstellung von Cheddarkäse in besonders vorteilhafter Weise begünstigen.

Gemäß einer weiteren Ausführungsform des Verfahrens kann der erneut gepresste oder fertiggepresste Käsebruch durch Rütteln und/oder Ausblasen aus den jeweiligen Käseformen ausgebracht und bevorzugt einer weiteren Verarbeitung zugeführt werden.

Ein Vorteil einer solchen Ausführungsform kann sein, dass auch nach dem längeren Pressen vergleichsweise fest in der Käseform sitzende Käsemasse sicher entformbar beziehungsweise ausbringbar ist.

Gemäß einer weiteren Ausführungsform des Verfahrens kann der durch das Cheddarmodul verarbeitete Käsebruch durch eine Fördereinrichtung, insbesondere durch einen Schneckenförderer, weitergeleitet wird, etwa zu einer weiteren Verarbeitungsvorrichtung oder zu einer Verpackungsvorrichtung. So kann der durch das Cheddarmodul verarbeitete Käsebruch nach einem Weiterleiten beispielswiese portioniert und/oder in Formen abgefüllt und/oder und gepresst und insbesondere fertiggepresst werden.

Ein Vorteil einer solchen Ausführungsform kann sein, dass der Käse beziehungsweise der Käsebruch mit nur geringem Aufwand durch die jeweiligen Produktionsschritte geleitet und letztlich ein verkaufsfähiges Endprodukt erzeugbar ist.

Die voranstehend in Bezug auf die Vorrichtung dargelegten Merkmale, Einzelheiten und Vorteile gelten gleichermaßen auch in Bezug auf das voranstehend beschriebene Verfahren sowie auch in Bezug auf das Cheddarmodul und/oder den Nachrüstsatz gemäß den weiteren unabhängigen Aspekten der vorliegenden Erfindung.

Zum besseren Verständnis der vorliegenden Erfindung wird nachfolgend auf die Zeichnungen Bezug genommen. Diese zeigen schematisch lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen.

Es zeigen:
- Figur 1: ein erstes Ausführungsbeispiel einer Vorrichtung zur Käseherstellung in einer schematischen Perspektivansicht,
- Figur 2: ein Ausführungsbeispiel eines Cheddarmoduls in einer schematischen Perspektivansicht,
- Figur 3: das Ausführungsbeispiel der Figur 2 ein einer weiteren schematischen Perspektivansicht,
- Figur 4: das Ausführungsbeispiel der Figuren 2 und 3 in einer schematischen Schnittdarstellung,
- Figur 5: die Schnittdarstellung der Figur 4 in einer Teilansicht,
- Figur 6: das Ausführungsbeispiel der Figuren 2 bis 5 in einer weiteren schematischen Schnittdarstellung,
- Figur 7: das Ausführungsbeispiel der Figuren 4 bis 6 mit einer optionalen Salzereinrichtung in einer ersten Position in einer schematischen Schnittdarstellung,
- Figur 8: das Ausführungsbeispiel der der Figuren 4 bis 6 mit einer optionalen Salzereinrichtung in einer zweiten Position in einer schematischen Schnittdarstellung,
- Figur 9: die Vorrichtung zur Käseherstellung in einer im Vergleich zur Figur 1 vergrößerten schematischen Teildarstellung,
- Figur 10: die Vorrichtung zur Käseherstellung in einer im Vergleich zur Figur 9 vergrößerten schematischen Teildarstellung und mit einer Ausgabeeinrichtung in einer Ausgabeposition,
- Figur 11: die Vorrichtung zur Käseherstellung der Figur 10 mit der Ausgabeeinrichtung in einer Wiederaufnahmeposition und
- Figur 12: eine schematische Darstellung eines Verfahrens zur Käseherstellung in einem Ablaufdiagramm.

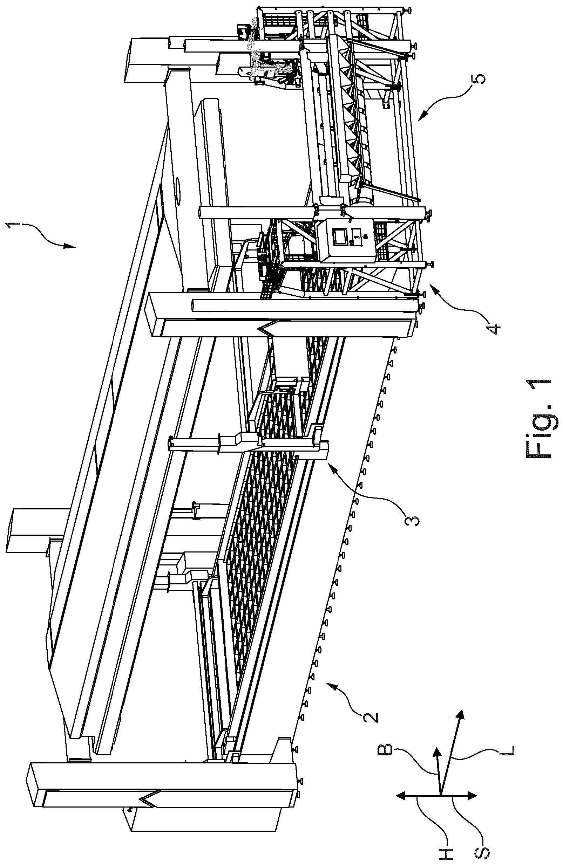

Figur 1 zeigt eine Vorrichtung 1 zur Käseherstellung. Die Vorrichtung 1 weist eine Käsebruchpressvorrichtung 2 zum flüssigkeitsverringernden Pressen von Käsebruch auf. Ferner weist die Vorrichtung 1 eine Ausgabeeinrichtung 3 zur Ausgabe von gepresstem Käsebruch aus der Käsebruchpressvorrichtung 2 auf. Darüber hinaus weist die Vorrichtung 1 ein Cheddarmodul 4 zur Aufnahme von gepresstem Käsebruch von der Ausgabeeinrichtung 2 auf. Mithin kann die Ausgabeeinrichtung 3 zur Ausgabe von gepresstem Käsebruch aus der Käsebruchpressvorrichtung 2 an das Cheddarmodul 4 ausgebildet und/oder eingerichtet sein.

Das Cheddarmodul 4 und optional auch die Ausgabeeinrichtung 3 können alternativ Teil eines Nachrüstsatzes für eine Käsebruchpressvorrichtung 2 sein.

Das Cheddarmodul 4 kann an der Käsebruchpressvorrichtung 2 angeordnet oder anordnenbar sein. Beispielswiese kann das Cheddarmodul 4 an einem stirnseitigen Ende oder an einem Längsende 5 der Käsebruchpressvorrichtung 2 angeordnet oder anordnenbar sein. Das stirnseitige Ende oder Längsende 5 kann ein in einer Längsrichtung L der Käsebruchpressvorrichtung 2 liegendes Ende der Käsebruchpressvorrichtung 2 sein. Die Käsebruchpressvorrichtung 2 kann eine Breitenrichtung B aufweisen, die quer zur Längsrichtung L verläuft. In der Längsrichtung L kann die Käsebruchpressvorrichtung 2 größer dimensioniert sein als in der Breitenrichtung B. Ferner kann die Käsebruchpressvorrichtung 2 eine entgegen der Vertikalen oder der Schwerkraftrichtung S weisende Höhenrichtung H aufweisen. Die Höhenrichtung H kann quer zur Längsrichtung L und zur Breitenrichtung B verlaufen.

Die Ausgabeeinrichtung 3 kann zumindest entlang der Längsrichtung L bewegbar sein, um gepressten Käsebruch zum Cheddarmodul 4 zu transportieren. Zumindest abschnittsweise kann die Ausgabeeinrichtung 3 entlang der Höhenrichtung H bewegbar sein, um gepressten Käsebruch für den Transport zum Cheddarmodul 4 oder zur Ausgabe an das Cheddarmodul 4 anzuheben. Die Ausgabeeinrichtung 3 kann sich in der Breitenrichtung B zumindest teilweise über einen Teil der Käsebruchpressvorrichtung 2 erstrecken.

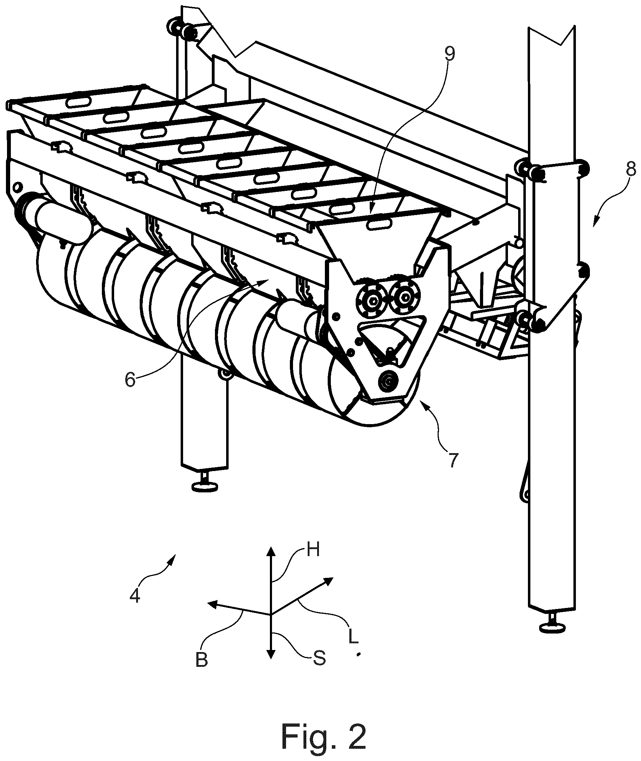

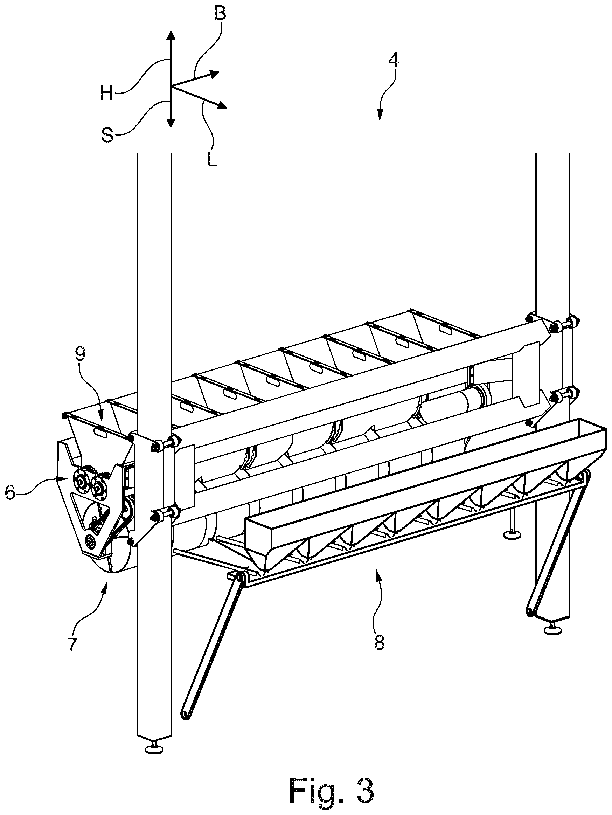

Figuren 2 und 3 zeigen das Cheddarmodul 4 schematisch in perspektivischen Einzeldarstellungen. Das Cheddarmodul 4 zur Verarbeitung von gepresstem Käsebruch ist insbesondere ein Cheddarmodul 4 für eine Vorrichtung 1 zur Käseherstellung, wobei die Vorrichtung 1 eine Käsebruchpressvorrichtung 2 zum flüssigkeitsverringernden Pressen von Käsebruch und eine Ausgabeeinrichtung 3 zur Ausgabe von gepresstem Käsebruch aus der Käsebruchpressvorrichtung 2 aufweisen kann, wie insbesondere voranstehend beschrieben.

Das Cheddarmodul 4 weist zumindest optional eine Käsebruchzerkleinerungseinrichtung 6 auf. Die Käsebruchzerkleinerungseinrichtung 6 kann als Schredder-Vorrichtung ausgebildet sein.

Das Cheddarmodul 4 weist zumindest optional eine Mischeinrichtung 7 zum Mischen von Käsebruch auf. Der Käsebruch kann Käsebruch sein, der von der Käsebruchzerkleinerungseinrichtung 6 zerkleinert worden ist. Die Mischeinrichtung 7 kann der Käsebruchzerkleinerungseinrichtung 6 zerkleinerten Käsebruch aufnehmend nachgeordnet sein. Das Cheddarmodul 4 kann als Schredder-Misch-Vorrichtung ausgebildet sein, also insbesondere die Käsebruchzerkleinerungseinrichtung 6 und die Mischeinrichtung 7 aufweisen.

Das Cheddarmodul 4 weist zumindest optional eine Salzereinrichtung 8 für die Zuführung von Salz und/oder anderen Zusätzen wie Gewürz oder Kräuter zu aufgenommenem Käsebruch auf. Die Salzereinrichtung kann der Käsebruchzerkleinerungseinrichtung 6 und/oder der Mischeinrichtung 7 Salz und/oder andere Zusätze wie Gewürz oder Kräuter zuführend vorgeordnet sein.

Zumindest die Käsebruchzerkleinerungseinrichtung 6 kann zur Anordnung nachgeordnet einer Ausgabeeinrichtung 3 für gepressten Käsebruch und/oder zur Anordnung nachgeordnet an einer Käsebruchpressvorrichtung 2 ausgebildet sein.

Die Mischeinrichtung 7 kann im Betrieb des Cheddarmoduls 4 und/oder wenn das Cheddarmodul 4 betriebsbereit an der Käsebruchpressvorrichtung 2 angeordnet ist, entlang der Schwerkraftrichtung S oder Vertikalrichtung zumindest abschnittsweise hinter der Käsebruchzerkleinerungseinrichtung 6 und/oder der Salzereinrichtung 8 angeordnet sein.

Das Cheddarmodul 4 kann die Salzereinrichtung 8 aufweisen, wobei die Mischeinrichtung 7 der Salzereinrichtung 8 Salz und/oder andere Zusätze wie Gewürz oder Kräuter empfangend direkt nachgeordnet sein kann. Zusätzlich oder alternativ kann die Salzereinrichtung 8 etwa zur Salzzuführung in die Mischeinrichtung 7 zumindest abschnittsweise über oder oberhalb der Käsebruchzerkleinerungseinrichtung 6 ausgebildet und/oder angeordnet oder anordenbar sein.

Die Käsebruchzerkleinerungseinrichtung 6 kann eine Aufnahmeöffnung 9 zur Aufnahme des gepressten Käsebruchs aufweisen. Die Aufnahmeöffnung 9 kann die Käsebruchzerkleinerungseinrichtung 6 in der Höhenrichtung H öffnen und/oder nach Art eine Öffnung oder eine Mehrzahl von Öffnungen nach eines Trichters bilden. Gepresster Käsebruch kann also entlang der Schwerkraftrichtung S durch die Aufnahmeöffnung 9 in die Käsebruchzerkleinerungseinrichtung 6 fallen.

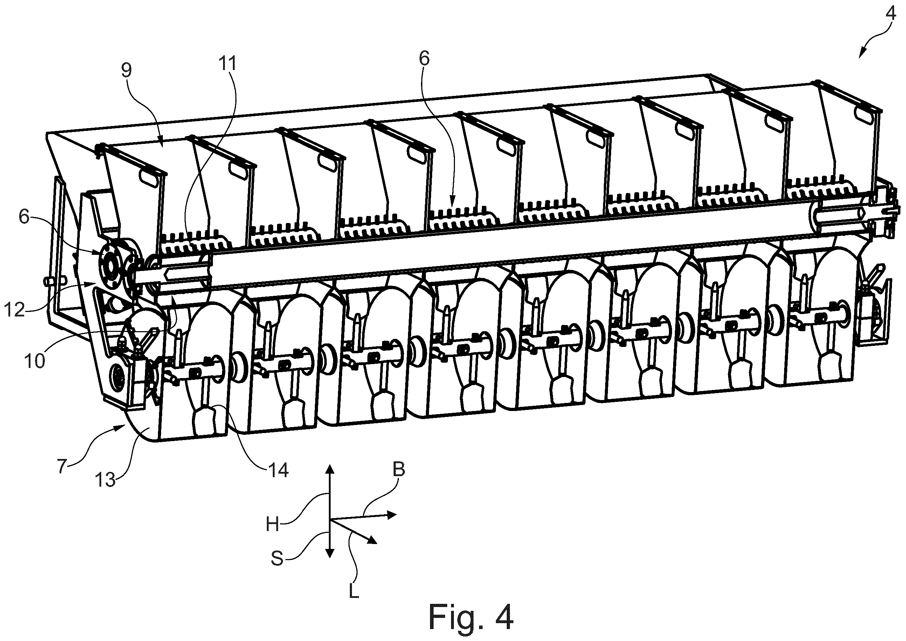

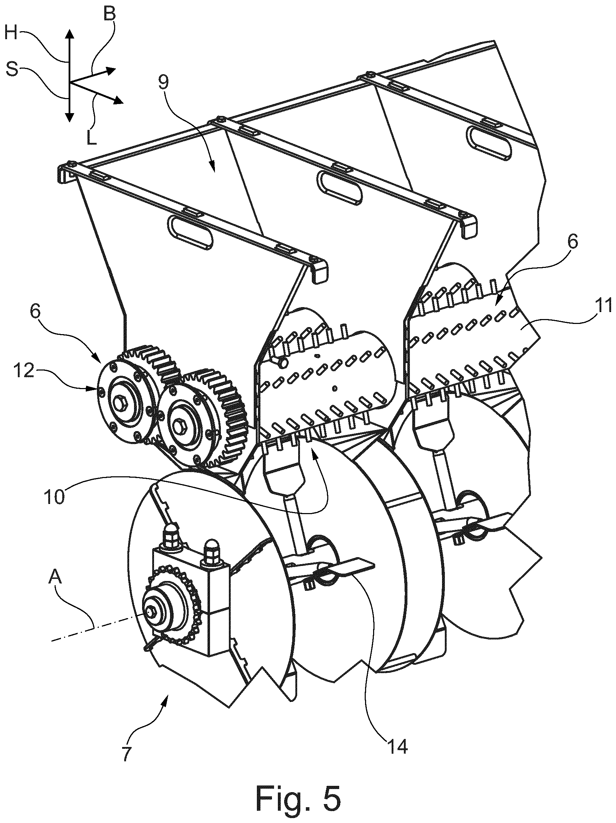

Figur 4 zeigt das Cheddarmodul 4 teilweise in einer schematischen Schnittdarstellung, wobei die Schnittebene parallel zur Höhenrichtung H und zur Breitenrichtung B verläuft. Figur 5 zeigt das Cheddarmodul 4 der Figur 4 teilweise in einer vergrößerten Schnittdarstellung mit derselben Schnittebene.

Die Käsebruchzerkleinerungseinrichtung 6 kann ferner eine Ausgebeöffnung 10 für den zerkleinerten Käsebruch aufweisen. Die Ausgebeöffnung 10 kann die Käsebruchzerkleinerungseinrichtung 6 in der Schwerkraftrichtung S öffnen. Zerkleinerter Käsebruch kann also entlang der Schwerkraftrichtung S durch die Ausgebeöffnung 10 aus der Käsebruchzerkleinerungseinrichtung 6 fallen oder schwerkraftbasiert geleitet werden.

Die Käsebruchzerkleinerungseinrichtung 6 kann ein Käsebruchzerkleinerungswerkzeug 11 aufweisen. Das Käsebruchzerkleinerungswerkzeug 11 kann wenigstens abschnittsweise zwischen der Aufnahmeöffnung 9 und der Ausgebeöffnung 10 angeordnet sein, beispielswiese entlang der Schwerkraftrichtung S.

Das Käsebruchzerkleinerungswerkzeug 11 kann eine Schredderwalze, ein Schredderwalzenpaar, eine Stachelwalze, ein Stachelwalzenpaar, eine Messerwalze, ein Messerwalzenpaar oder ein Messerschneidwerk mit einer Rotationsklinge und/oder einer statischen Klinge und/oder einem Messerraster aufweisen oder sein.

Ist das Käsebruchzerkleinerungswerkzeug 11 ein Messerraster oder das Messerschneidwerk mit statischer Klinge oder weist das Käsebruchzerkleinerungswerkzeug 11 ein Messerraster oder das Messerschneidwerk mit statischer Klinge auf, kann es ausreichen, dass der gepresste Käsebruch auf das Messerraster oder die statische Klinge fällt, um den gepressten Käsebruch zu zerkleinern. Optional kann die Käsebruchzerkleinerungseinrichtung 6 einen nicht dargestellten Pressstempel aufweisen, der den gepressten Käsebruch durch das Messerraster oder auf die statische Klinge presst.

Weist das Käsebruchzerkleinerungswerkzeug 11 ein anderes der genannten Zerkleinerungswerkzeuge auf, können die Schredderwalze, das Schredderwalzenpaar, die Stachelwalze, das Stachelwalzenpaar, die Messerwalze, das Messerwalzenpaar oder das Messerschneidwerk mit der Rotationsklinge mit einem Rotationsantrieb verbunden sein, um die genannten Zerkleinerungswerkzeuge zum Zerkleinern des gepressten Käsebruchs zu rotieren. Weist das Käsebruchzerkleinerungswerkzeug 11 mehr als eine Walze auf, können die Walzen gegenläufig antreibbar oder angetrieben sein.

Im gezeigten Ausführungsbeispielgemäß Figur 4 ist das Käsebruchzerkleinerungswerkzeug 11 beispielhaft als ein mit einem Rotationsantrieb 12 angetriebenes Stachelwalzenpaar dargestellt.

Die Mischeinrichtung 7 kann eine Mischtrommel 13 aufweisen. Die Mischtrommel 13 kann zur Aufnahme von zerkleinertem Käsebruch ausgebildet sein. In der Mischtrommel 13 kann der zerkleinerte Käsebruch mit Zusätzen, etwa Salz, Kräuter und/oder Gewürze, vermischt werden.

Die Mischeinrichtung 7 kann wenigstens ein Mischwerkzeug 14 aufweisen. Die Mischtrommel 13 und/oder das Mischwerkzeug 14 können um Rotationsachsen herum rotierbar und zur Rotation antreibbar beziehungsweise angetrieben sein. Beispielswiese können die Mischtrommel 13 und das Mischwerkzeug 14 um eine gemeinsame Rotationsachse A rotierbar sein. Die Mischtrommel 13 und das Mischwerkzeug 14 können unabhängig voneinander um individuelle oder um die gemeinsame Rotationsachse A rotierbar sein. Die gemeinsame Rotationsachse A kann parallel oder schräg zu wenigstens einer Rotationsachse des Käsebruchzerkleinerungswerkzeugs 11 verlaufend angeordnet sein. Im gezeigten Ausführungsbeispiel verläuft die gemeinsame Rotationsachse A beispielhaft parallel zu wenigstens einer Rotationsachse des Käsebruchzerkleinerungswerkzeug 11. Beispielsweise verläuft die gemeinsame Rotationsachse A und/oder die wenigstens einer Rotationsachse des Käsebruchzerkleinerungswerkzeug 11 entlang der Breitenrichtung B.

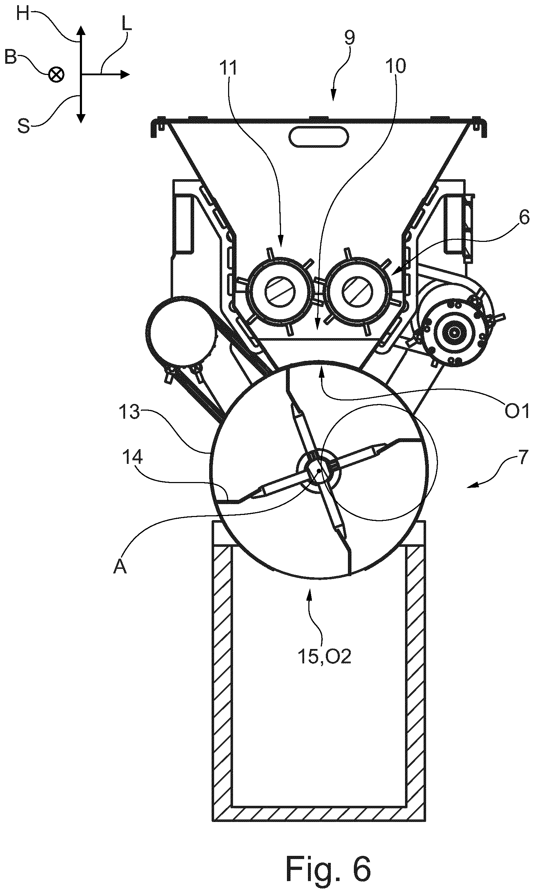

Figuren 6 bis 8 zeigen das Cheddarmodul 4 schematisch in weiteren Schnittdarstellungen, wobei die jeweilige Schnittebene parallel zur Längsrichtung L und zur Höhenrichtung H verläuft.

Die Mischtrommel 13 kann eine Öffnung 15 aufweisen, die beispielsweise in einer Mantelfläche der Mischtrommel 13 vorgesehen sein kann. Das Cheddarmodul 4 kann dazu ausgebildet sein, die Mischtrommel 13 um die Rotationsachse A in eine Mehrzahl unterschiedlicher Betriebsstellungen O1, O2, O3 zu drehen.

Beispielsweise kann die Mischtrommel 13 so gedreht werden, dass deren Öffnung 15 in einer Käsebruchaufnahmeposition O1 angeordnet ist, in der die Öffnung 15 zur Käsebruchzerkleinerungseinrichtung 6 weist. In der Käsebruchaufnahmeposition O1 kann die Öffnung 15 entgegen die Schwerkraftrichtung S weisen, sodass zerkleinerter Käsebruch durch die Öffnung 15 in die Mischtrommel 13 fallen kann. Beispielsweise kann die Mischtrommel 13 so gedreht werden, dass deren Öffnung 15 in einer Käsebruchabgabeposition O2 angeordnet ist, in der die Öffnung 15 in die Schwerkraftrichtung S weist, sodass zerkleinerter Käsebruch durch die Öffnung 15 aus der Mischtrommel 13 fallen kann. Die Käsebruchaufnahmeposition O1 und die Käsebruchabgabeposition O2 sind lediglich zur Veranschaulichung beide in der Figur 6 dargestellt. Im Betrieb kann die Öffnung 15 nur in einer der Käsebruchaufnahmeposition O1 und der Käsebruchabgabeposition O2 angeordnet sein.

Weiterhin kann die Mischtrommel 13 beispielsweise so gedreht werden, dass deren Öffnung 15 in einer Salzaufnahmeposition O3 angeordnet ist, in der die Öffnung 15 zur Salzereinrichtung 8 weist oder zur Aufnahme von Salz von der Salzereinrichtung 8 orientiert ist. In einer um die Rotationsachse A verlaufenden Rotationsrichtung kann die Salzaufnahmeposition O3 zwischen der Käsebruchaufnahmeposition O1 und der Käsebruchabgabeposition O2 angeordnet sein.

Die Salzaufnahmeposition O3 kann näher an der Käsebruchaufnahmeposition O1 als an der Käsebruchabgabeposition O2 angeordnet sein. Ein Summenvektor aller Normalvektoren der Öffnung 15 kann in der Salzaufnahmeposition O3 wenigstens komponentenweise entgegen die Schwerkraftrichtung S weisen.

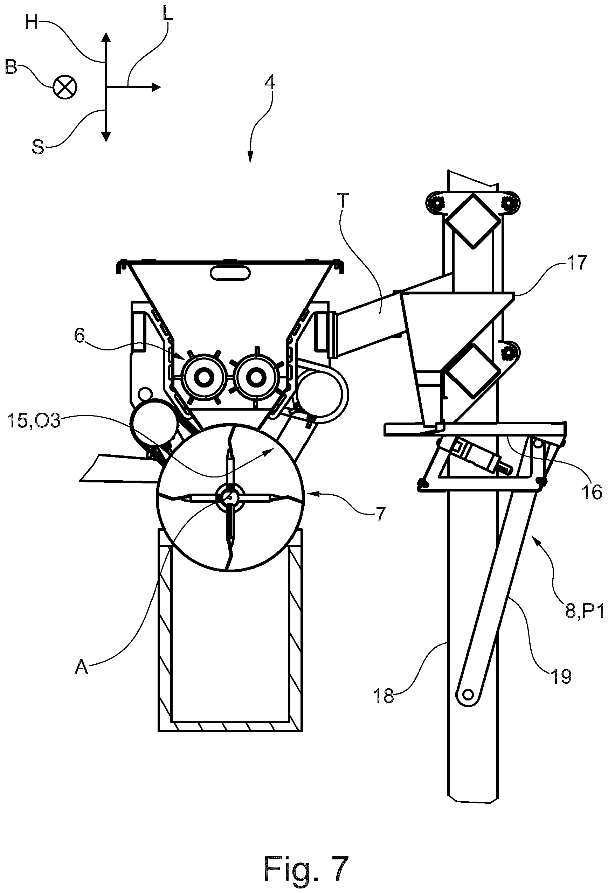

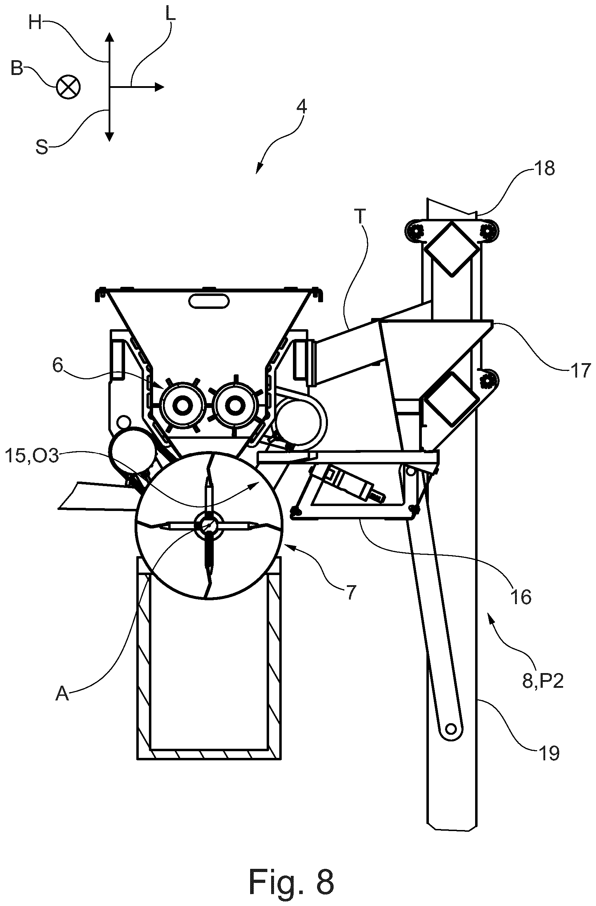

Die Schnittdarstellungen in den Figuren 7 und 8 zeigen zusätzlich die Salzereinrichtung 8 in unterschiedlichen Positionen P1 und P2.

Die Salzereinrichtung 8 kann einen Salzbehälter 17 aufweisen. Alternativ oder zusätzlich kann die Salzereinrichtung 8 eine einem oder dem Salzbehälter 17 etwa Salz empfangend nachgeordnete Salzrutsche 16 aufweisen. Die Salzereinrichtung 8 kann zumindest teilweise auf die Mischeinrichtung 7 zu und/oder von dieser weg bewegbar sein, bevorzugt durch eine automatisierte Antriebseinrichtung. Beispielswiese kann der Salzbehälter 17 auf die Mischeinrichtung 7 zu und/oder von dieser weg bewegbar sein. Beispielswiese kann die Salzrutsche 16 auf die Mischeinrichtung 7 zu und/oder von dieser weg bewegbar sein. Beispielswiese können der Salzbehälter 17 und die Salzrutsche 16 gemeinsam auf die Mischeinrichtung 7 zu und/oder von dieser weg bewegbar sein. Der Salzbehälter 17 und die Salzrutsche 16 können bewegungsübertragend miteinander verbunden und beispielsweise aneinander befestigt sein.

Figur 7 zeigt die Salzereinrichtung 8 in einer Bereitschaftsposition P1, in der die Salzereinrichtung 8 beabstandet von der Mischeinrichtung 7 angeordnet ist. In der Bereitschaftsposition P1 kann also, etwa von der Salzrutsche 16, kein Salz beziehungsweise Zusatz in die Mischtrommel 13 fallen. In der Bereitschaftsposition P1 kann es einfach sein, Zusätze, etwa Salz, Gewürze und/oder Kräuter, in den Salzbehälter 17 einzufüllen.

Die Schnittdarstellung in Figur 8 zeigt die Salzereinrichtung 8 in ihrer Salzerposition P2. In der Salzerposition P3 kann ein vom Salzbehälter 17 weg weisendes Ende der Salzrutsche 16 in oder in der Schwerkraftrichtung S vor der Öffnung 15 angeordnet sein. Die Salzerposition P2 kann durch einen mechanischen Anschlag vorgegeben sein und/oder durch eine Steuer- und/oder Regelengsvorrichtung für eine Antriebseinreichung einprogrammiert und/oder vorgegeben sein.

In der Salzerposition P2 kann beispielswiese der Salzbehälter 17 entgegen der Längsrichtung L an einem mechanischen Anschlag anliegen. Der Anschlag kann durch einen Pfosten 18 der Salzereinrichtung 8 bereitgestellt sein. Der Pfosten 18 kann Bestandteil eines Grundgestells der Salzereinrichtung 8 sein. An dem Grundgestell und beispielswiese an dem Pfosten 18 oder an einem anderen Teil des Grundgestells kann die Käsebruchzerkleinerungseinrichtung 6 angebracht und beispielswiese befestigt sein. Beispielswiese kann optional eine Strebe T vorgesehen sein, die die Käsebruchzerkleinerungseinrichtung 6 an dem Pfosten 18 befestigt. Ist die Käsebruchzerkleinerungseinrichtung 6 an einem anderen Teil des Grundgestells befestigt, kann die Strebe T weggelassen sein.

Die Mischeinrichtung 7 kann am Pfosten 18 oder an der Käsebruchzerkleinerungseinrichtung 6 angebracht und beispielswiese befestigt sein.

Zumindest in der Salzerposition P2 kann die Salzrutsche 16 in Richtung auf die Mischeinrichtung 7 ein durchgängiges Gefälle aufweisen. Alternativ oder zusätzlich kann die Salzeinrichtung 8 einen die Salzrutsche 16 in der Salzerposition P2 im Betrieb rüttelnden Rüttelantrieb aufweisen, um den Transport von Zusätzen wie Salz, Gewürzen und/oder Kräutern vom Salzbehälter 17 zur Mischeinrichtung 7 zumindest zu beschleunigen oder zu steuern.

In der Bereitschaftsposition P1 kann die Salzrutsche 16 senkrecht zur Schwerkraftrichtung S oder in Richtung auf den Salzbehälter 17 zu ein Gefälle aufweisen.

Die Salzereinrichtung 8 kann einen Antriebsarm 19 aufweisen. Ein Abschnitt des Antriebsarms 19 kann drehbar am Pfosten 18 angebracht sein. Ein dem einen Abschnitt gegenüberliegender Abschnitt des Antriebsarms 19 kann bewegungsübertragend an der Salzrutsche 16 und/oder an dem Salzbehälter 17 angebracht sein. Der Antriebsarm 19 kann auf den Pfosten 18 zu und von diesem weg schwenkbar sein, um die Salzereinrichtung 8 zwischen den Positionen P1 und P2 hin und her zu bewegen. Der Antriebsarm 19 und die Salzrutsche 16 können zusammen eine Anordnung nach Art eines Koppelgetriebes bilden.

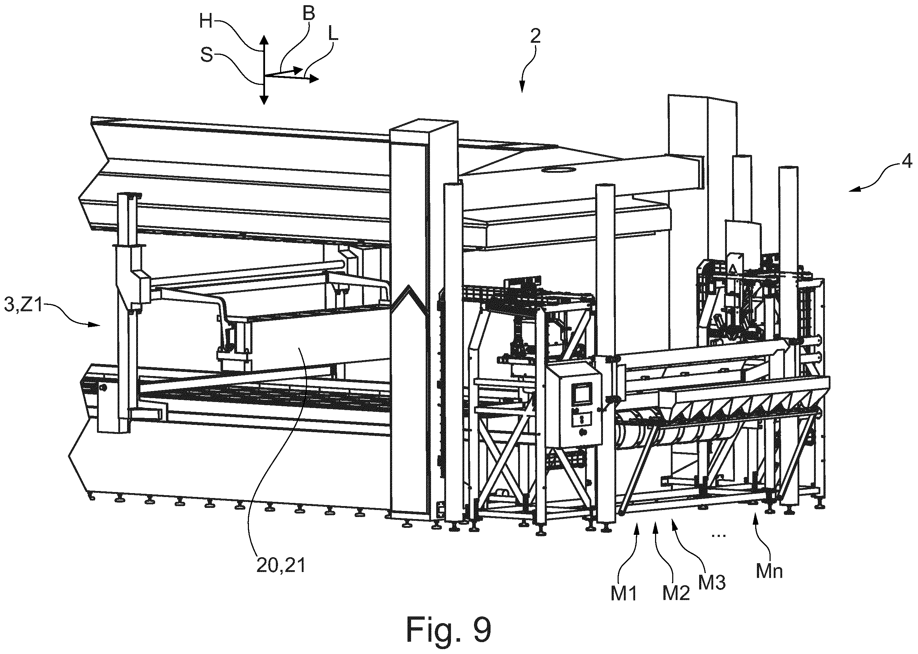

Figuren 9 bis 11 zeigen die Käsebruchpressvorrichtung 2 mit der Ausgabeeinrichtung 3 und dem Cheddarmodul 4, wobei die Ausgabeeinrichtung 3 in unterschiedlichen Betriebszuständen Z1, Z2, Z3 dargestellt ist.

In Figur 9 ist die Ausgabeeinrichtung 3 in ihrem Transportzustand Z1 dargestellt. Im Transportzustand Z1 transportiert die Ausgabeeinrichtung 3 gepressten Käsebruch aus der Käsebruchpressvorrichtung 2 zum Cheddarmodul 4 und bewegt sich dazu beispielswiese entlang der Längsrichtung L.

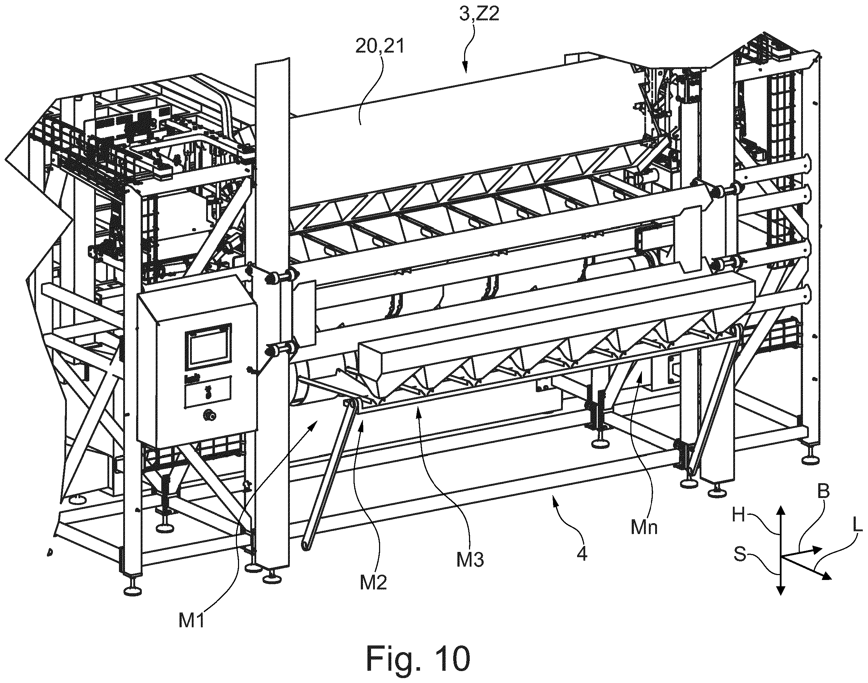

Figur 10 zeigt die Ausgabeeinrichtung 3 in ihrem Ausgabezustand Z2. Im Ausgabezustand Z2 ist die Ausgabeeinrichtung 3 dazu angeordnet, um gepressten Käsebruch an das Cheddarmodul 4 auszugeben und beispielswiese in das

Cheddarmodul 4 zu schütten. Beispielswiese kann die Ausgabeeinrichtung 3 im Ausgabezustand Z2 zumindest teilweise über dem Cheddarmodul 4, also in der Schwerkraftrichtung S vor dem Cheddarmodul 4, angeordnet sein, wie in Figur 10 gezeigt ist.

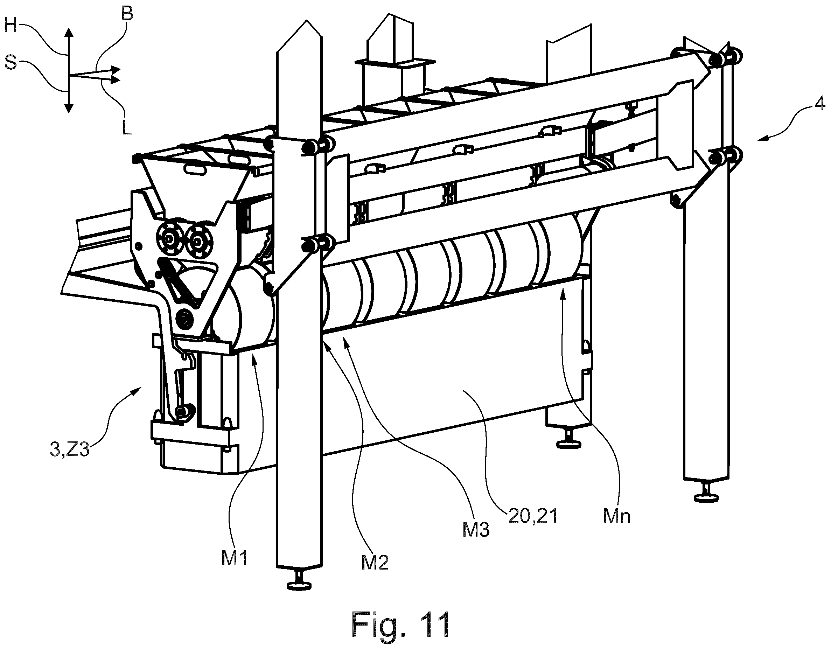

Figur 11 zeigt die Ausgabeeinrichtung 3 in ihrem Wiederaufnahmezustand Z3. Im Wiederaufnahmezustand Z3 kann die Ausgabeeinrichtung 3 dazu angeordnet sein, um zerkleinerten und/oder mit wenigstens einem Zusatz vermischten Käsebruch vom Cheddarmodul 4 wieder aufzunehmen. Beispielswiese kann die Ausgabeeinrichtung 3 zumindest im Wiederaufnahmezustand Z3 teilweise unter dem Cheddarmodul 4, also in der Schwerkraftrichtung S hinter dem Cheddarmodul 4, angeordnet sein, wie in Figur 11 gezeigt ist.

Insbesondere kann die Ausgabeeinrichtung 3 vom Ausgabezustand Z2 in den Wiederaufnahmezustand Z3 bewegbar sein, indem die Ausgabeeinrichtung 3 mit den jeweiligen Käseformen 20 zunächst entgegen der Längsrichtung L bewegt, anschließend entlang eines Zwischenraums zwischen dem Cheddarmodul 4 und der Käsebruchpressvorrichtung 2 beziehungsweise einer Wanne der Käsebruchpressvorrichtung 2 in Schwerkraftrichtung S abgesenkt und dann entlang einer Längsrichtung L unterhalb das Cheddarmodul bewegt wird.

Zusätzlich oder alternativ kann das Cheddarmodul 4 oder zumindest ein Teil des Cheddarmoduls 4 entlang der Höhenrichtung H beziehungsweise entgegen der Schwerkraftrichtung S angehoben werden, um eine Positionierung der Ausgabeeinrichtung 3 in einem Wiederaufnahmezustand Z3 unterhalb des Cheddarmoduls 4 zu ermöglichen oder zu vereinfachen. Beispielsweise kann die Salzereinrichtung 8 in ihrer Bereitschaftsposition P1 angeordnet und/oder die Käsebruchzerkleinerungseinrichtung 6 sowie die Mischeinrichtung 7 können entlang des Pfostens 18 in Höhenrichtung H verschoben, insbesondere angehoben werden.

Die Käsebruchpressvorrichtung 2 kann eine in einer Draufsicht offene Wanne und/oder einen Presskopf mit einer Vielzahl von Pressstempeln zum Pressen der Käserohmasse aufweisen. Beispielswiese kann die Käsebruchpressvorrichtung 2 Pressstempel aufweisen, die auf in der Wanne angeordneten Käseformen 20 ausgerichtet sind. Alternativ oder zusätzlich kann die Käsebruchpressvorrichtung 2 als Kassettenpresse, Einschwemmpresse, Tunnelpresse und/oder Wendepresse ausgebildet sein.

Die Käsebruchpressvorrichtung 2 kann eine Mehrzahl von Käseformen 20 aufweisen. Die Käseformen 20 können als Käsebruchpressbehälter ausgebildet sein. Die Käseformen 20 können in Kassettenformen 21, insbesondere mit mehreren Käseformen 20, ausgebildet und/oder angeordnet sein. Die Käseformen 20 können in mehreren Aufnahmekassetten angeordnet oder aufgenommen sein. Die Kassettenpresse kann eine Mehrzahl von Kassettenformen 21 und/oder Aufnahmekassetten für Käseformen 20 aufweisen, insbesondere mit jeweils mehreren Käseformen 20 und/oder Käsebruchpressbehältern.

In den Figuren 9 bis 11 ist die Käsebruchpressvorrichtung 2 beispielhaft mit mehreren Kassettenformen 21, die jeweils mehrere Käseformen 20 beinhalten oder bereitstellen, dargestellt. Die Kassettenformen 21 können beispielswiese mehrere in der Breitenrichtung B hintereinander angeordnete Käseformen 20 beinhalten oder bereitstellen. Die Kassettenformen 21 könne jeweils nur eine einzige, sich in der Breitenrichtung B erstreckende Reihe von Käseformen 20 aufweisen oder bereitstellen. Die Reihe von Käseformen 20 kann einstückig handhabbar sein.

Eine Käseformen 20 beinhaltende Kassettenform 21 kann auch als Aufnahmekassette bezeichnet werden.

Im Transportzustand Z1 kann die Ausgabeeinrichtung 3 eine der Kassettenformen 21 transportieren und beispielswiese zunächst entgegen der Schwerkraftrichtung S anheben und danach entlang der Längsrichtung L auf das Cheddarmodul 4 zu bewegen.

Die Ausgabeeinrichtung 3 kann dazu ausgebildet sein, in ihrem Ausgabezustand Z2 wenigstens eine Käseform 20 und/oder eine Kassettenform 21 und/oder eine Aufnahmekassette, insbesondere mit mehreren Käseformen, in der Schwerkraftrichtung S zumindest abschnittsweise vor dem Cheddarmodul 4 anzuordnen und den gepressten Käsebruch bevorzugt in die Käsebruchzerkleinerungseinrichtung 6 auszuleeren. Beispielswiese kann die Ausgabeeinrichtung 3 dazu ausgebildet sein, in ihrem Ausgabezustand Z2 wenigstens eine Käseform 20 und/oder eine Kassettenform 21 und/oder eine Aufnahmekassette, insbesondere mit mehreren Käseformen, in der Schwerkraftrichtung S zumindest abschnittsweise vor dem Cheddarmodul anzuordnen und den gepressten Käsebruch durch eine Schwenkbewegung bevorzugt in die Käsebruchzerkleinerungseinrichtung auszuleeren.

Die Ausgabeeinrichtung 3 kann also einen Schwenkmechanismus aufweisen, mit dem ein die Käseformen 20 und/oder eine Kassettenform 21 und/oder eine Aufnahmekassette haltender Haltemechanismus der Ausgabeeinrichtung 3 schwenkbar ist, insbesondere um eine zur Schwerkraftrichtung S senkrecht verlaufende Horizontalrichtung, beispielswiese um die Breitenrichtung B verlaufende Horizontalrichtung.

Die Ausgabeeinrichtung 3 kann dazu ausgebildet sein, in ihrem Wiederaufnahmezustand Z3 Käseformen 20 und/oder eine Kassettenform 21 und/oder eine Aufnahmekassette in der Schwerkraftrichtung S zumindest abschnittsweise hinter dem Cheddarmodul 4 anzuordnen, um Käsebruch, nachdem der Käsebruch im Cheddarmodul 4 verarbeitet wurde, wieder in den der jeweiligen Käseform 20 und/oder Kassettenform 21 und/oder Aufnahmekassette aufzunehmen oder in diese fallen zu lassen.

Die Ausgabeeinrichtung 3 kann dazu ausgebildet sein, eine Käseform 20 und/oder eine Kassettenform 21 und/oder eine Aufnahmekassette nach dem erneuten Befüllen mit durch das Cheddarmodul 4 bearbeiteten Käsebruch in der Käsebruchpressvorrichtung 2 anzuordnen, insbesondere für ein erneutes Pressen des Käsebruchs und/oder für ein Fertigpressen des Käsebruchs.

Eine Kassettenform 21 und/oder eine Aufnahmekassette kann eine Mehrzahl von reihenförmig angeordneten Käseformen 20 aufweisen oder bereitstellen, wobei eine Kassettenform 21 und/oder eine Aufnahmekassette insbesondere ausschließlich eine einzige Reihe von Käseformen 20 aufweisen oder bereitstellen kann. Die optional als Kassettenpresse ausgebildete Käsebruchpressvorrichtung 2 kann dazu ausgebildet sein, im Pressbetrieb in mehreren Käseformen 20 gleichzeitig ein Pressen von Käsebruch vorzunehmen.

Das Cheddarmodul 4 kann eine Mehrzahl von Modulsegmenten M1, M2, M3... Mn aufweisen. Die Modulsegmente M1, M2, M3... Mn können reihenförmig angeordnet sein. Die Modulsegmente M1, M2, M3... Mn können entlang einer sich entlang der Breitenrichtung B erstreckenden Breite der Käsebruchpressvorrichtung 2 und/oder entlang einer entlang der Breitenrichtung B erstreckenden Wannenbreite der Käsebruchpressvorrichtung 2 hintereinander angeordnet sein.

Die Modulsegmente M1, M2, M3... Mn können entsprechend einer Reihenanordnung von Käseformen 20, insbesondere einer Kassettenform 21, und/oder einer Aufnahmekassette ausgebildet und/oder angeordnet und/oder anordnenbar sein, insbesondere betreffend die Anzahl der Modulsegmente M1, M2, M3... Mn und/oder den Abstand der Modulsegmente M1, M2, M3... Mn zueinander.

Zumindest ausgewählte der oder alle Modulsegmente M1, M2, M3... Mn können eine Käsebruchzerkleinerungseinrichtung 6 und/oder eine Mischeinrichtung 7 aufweisen. Die Käsebruchzerkleinerungseinrichtungen 6 und/oder die Mischeinrichtungen 7 können separat oder gemeinsam betreibbar und beispielsweise antreibbar sein. Beispielswiese können die Mischeinrichtungen 7 eine gemeinsame Rotationsachse A aufweisen. Die Käsebruchzerkleinerungswerkzeuge 11 ausgewählter oder aller Käsebruchzerkleinerungseinrichtungen 6 können individuell und/oder gemeinsam antreibbar oder angetrieben sein. Die Salzereinrichtung 8 kann für ausgewählte oder jedes der Modulsegmente M1, M2, M3... Mn eine Salzrutsche 16 und einen gemeinsamen Salzbehälter 17 aufweisen. Alternativ kann die Salzereinrichtung 8 für ausgewählte oder jedes der Modulsegmente M1, M2, M3... Mn eine separate Salzrutsche 16 und für ausgewählte oder jedes der Modulsegmente M1, M2, M3... Mn einen separaten Salzbehälter 17 aufweisen.

Die Vorrichtung 1 kann zumindest eine weitere hier nicht näher dargestellte Käsebruchpressvorrichtung, insbesondere eine Tunnelpresse, aufweisen. Die weitere Käsebruchpressvorrichtung kann der Käsebruchpressvorrichtung 2 entsprechen oder eine andere Konfiguration oder Grundkonstruktion aufweisen. Die weitere Käsebruchpressvorrichtung kann dem Cheddarmodul 4 nachgeordnet sein. Die weitere Käsebruchpressvorrichtung kann ferner zum Pressen von durch das Cheddarmodul 4 bearbeitetem Käsebruch ausgebildet und/oder angeordnet sein. Die weitere Käsebruchpressvorrichtung kann zum Pressen von Käsebruch, der durch das Cheddarmodul 4 zerkleinert und/oder gemischt und/oder mit Salz und/oder zumindest einem anderen Zusatz vermischt ist und/oder der anschließend wieder in Käseformen abgefüllt worden, vorgesehen sein.

Die Vorrichtung 1 kann zusätzlich oder alternativ zumindest eine hier ebenfalls nicht näher dargestellte Fördereinrichtung, insbesondere ein Schneckenförderer, für die Weiterleitung des durch das Cheddarmodul 4 verarbeiteten Käsebruchs, und/oder für die Weiterleitung des durch das Cheddarmodul 4 verarbeiteten Käsebruchs zu zumindest eine Weiterverarbeitungsvorrichtung für den durch das Cheddarmodul 4 verarbeiteten Käsebruch, insbesondere für das Portionieren und/oder die Formenabfüllung und/oder und das Fertigpressen des Käsebruchs, aufweisen. Eine solche Fördereinrichtung kann in der Schwerkraftrichtung S hinter der Mischeinrichtung 7 angeordnet sein. Die Öffnung 15 der Mischtrommel 13 kann in der Käsebruchabgabeposition O3 der Fördereinrichtung zugewandt sein. Eine solche Fördereinrichtung kann so angeordnet sein, dass Käsebruch aus der Mischeinrichtung 7 auf die Fördereinrichtung fallen kann.

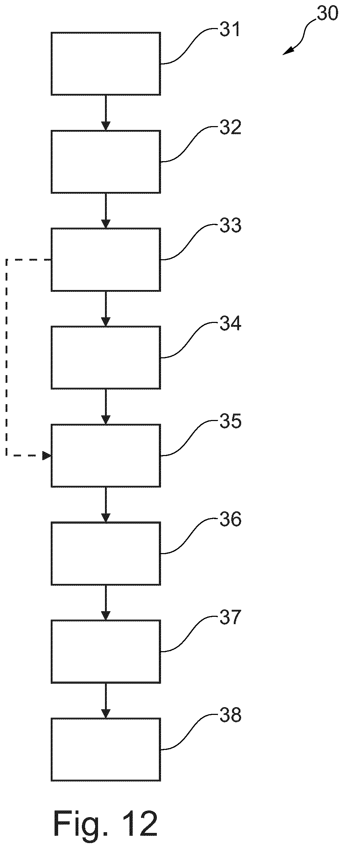

Figur 12 zeigt ein Ausführungsbeispiel eines Verfahrens zur Käseherstellung schematisch als ein Ablaufdiagramm.

Das Verfahren 30 zur Käseherstellung kann mit einer Vorrichtung 1 zur Käseherstellung nach dem vorstehenden Ausführungsbeispiel ausführbar sein. Für Elemente, die in Form und/oder Funktion Elementen des vorstehenden Ausführungsbeispiels entsprechen, werden im Folgenden der Einfachheit halber dieselben Bezugszeichen verwendet.

Bei dem Verfahren 30 erfolgt mit einer Käsebruchpressvorrichtung 2 ein flüssigkeitsverringerndes Pressen von Käsebruch. Der gepresste Käsebruch wird danach in einem Verfahrensschritt 31 mit einer Ausgabeeinrichtung 3 aus der Käsebruchpressvorrichtung 2 entnommen, in einem Verfahrensschritt 32 an ein Cheddarmodul 4 ausgegeben und in einem Verfahrensschritt 33 durch das Cheddarmodul 4 verarbeitet.

Der durch das Cheddarmodul 4 verarbeitete Käsebruch kann in einem Verfahrensschritt 34 wieder in Käseformen 20 aufgenommen werden. Zusätzlich oder alternativ kann der durch das Cheddarmodul 4 verarbeitete Käsebruch in der Käsebruchpressvorrichtung 2 oder in einer weiteren Käsebruchpressvorrichtung in einem Verfahrensschritt 35 erneut gepresst werden, insbesondere für einen Zeitraum von mindestens 5 Minuten und/oder höchstens 210 Minuten fertiggepresst werden.

Der erneut gepresste oder fertiggepresste Käsebruch kann in einem Verfahrensschritt 36 durch Rütteln und/oder Ausblasen aus den jeweiligen Käseformen 20 ausgebracht oder entformt und optional in einem Verfahrensschritt 37 einer weiteren Verarbeitung zugeführt werden.

Beispielswiese kann der durch das Cheddarmodul 4 in einem Verfahrensschritt 33 verarbeitete Käsebruch durch eine Fördereinrichtung, insbesondere durch einen Schneckenförderer, in einem Verfahrensschritt 37 weitergeleitet werden. Der durch das Cheddarmodul 4 verarbeitete Käsebruch kann nach einem Weiterleiten gemäß Verfahrensschritt 37 in einem Verfahrensschritt 38 portioniert und/oder in Formen abgefüllt und/oder und gepresst, insbesondere fertiggepresst, werden. Das Verfahren 30 eignet sich insbesondere für die Herstellung von Cheddar-Käse. Die Vorrichtung 1 eignet sich mithin zur Herstellung von Cheddar-Käse. Ebenso kann die Vorrichtung 1 auch zur Herstellung von anderen Käsesorten eingesetzt werden, wobei das Cheddarmodul je nach der jeweils herzustellenden Käsesorte eingesetzt werden oder lediglich in Bereitschaftsstellung verbleiben kann.

### BEZUGSZEICHENLSTE

- 1: Vorrichtung
- 2: Käsebruchpressvorrichtung
- 3: Ausgabeeinrichtung
- 4: Cheddarmodul
- 5: stirnseitiges Ende / Längsende
- 6: Käsebruchzerkleinerungseinrichtung
- 7: Mischeinrichtung
- 8: Salzereinrichtung
- 9: Aufnahmeöffnung
- 10: Ausgebeöffnung
- 11: Käsebruchzerkleinerungswerkzeug
- 12: Rotationsantrieb
- 13: Mischtrommel
- 14: Mischwerkzeug
- 15: Öffnung
- 16: Salzrutsche
- 17: Salzbehälter
- 18: Pfosten
- 19: Antriebsarm
- 20: Käseformen
- 21: Kassettenform
- 30: Verfahren
- 31: Käsebruch entnehmen
- 32: Käsebruch an Cheddarmodul ausgeben
- 33: Käsebruch in Cheddarmodul verarbeiten
- 34: Käsebruch nach Verarbeitung im Cheddarmodul wieder in Käseformen aufnehmen
- 35: Käsebruch erneut pressen
- 36: Käsebruch entformen
- 37: Käsebruch weiterer Verarbeitung zuführen
- 38: Käsebruch weitere Verarbeiten

- A: Rotationsachse
- B: Breitenrichtung
- H: Höhenrichtung
- L: Längsrichtung
- M1...n: Modulsegment
- O1: Käsebruchaufnahmeposition
- O2: Käsebruchabgabeposition
- O3: Salzaufnahmeposition
- P1: Bereitschaftsposition
- P2: Salzerposition
- S: Schwerkraftrichtung
- T: Strebe
- Z1: Transportzustand
- Z2: Ausgabezustand
- Z3: Wiederaufnahmezustand

## Patentansprüche

1. Vorrichtung (1) zur Käseherstellung, mit einer Käsebruchpressvorrichtung (2) zum flüssigkeitsverringernden Pressen von Käsebruch, mit einer Ausgabeeinrichtung (3) zur Ausgabe von gepresstem Käsebruch aus der Käsebruchpressvorrichtung (2) und mit einem Cheddarmodul (4) zur Aufnahme von gepresstem Käsebruch von der Ausgabeeinrichtung (3).

2. Vorrichtung (1) nach Anspruch 1, **dadurch gekennzeichnet, dass** das Cheddarmodul (4) eine Käsebruchzerkleinerungseinrichtung (6) zur Zerkleinerung von gepresstem Käsebruch aufweist, die insbesondre als Schredder-Vorrichtung ausgebildet ist.

3. Vorrichtung (1) nach einem der vorstehenden Ansprüche, **dadurch gekennzeichnet, dass** das Cheddarmodul (4) eine Mischeinrichtung (7) zum Mischen von zerkleinertem Käsebruch aufweist, insbesondere eine der Käsebruchzerkleinerungseinrichtung (6) zerkleinerten Käsebruch aufnehmend nachgeordnete Mischeinrichtung (7), und/oder dass das Cheddarmodul (4) als Schredder-Misch-Vorrichtung ausgebildet ist.

4. Vorrichtung (1) nach einem der vorstehenden Ansprüche, **gekennzeichnet durch** eine Salzereinrichtung (8) für die Zuführung von Salz zu aufgenommenem Käsebruch, wobei die Salzereinrichtung (8) bevorzugt der Käsebruchzerkleinerungseinrichtung (6) und/oder der Mischeinrichtung (7) Salz zuführend vorgeordnet ist.

5. Vorrichtung (1) nach einem der Ansprüche 3 oder 4, **dadurch gekennzeichnet, dass** die Mischeinrichtung (7) im Betrieb des Cheddarmoduls (4) entlang der Schwerkraftrichtung (S) oder Vertikalrichtung zumindest abschnittsweise hinter der Käsebruchzerkleinerungseinrichtung (6) und/oder der Salzereinrichtung (8) angeordnet ist.

6. Vorrichtung (1) nach Anspruch 4 oder 5, **dadurch gekennzeichnet, dass** das Cheddarmodul (4) die Salzereinrichtung (8) aufweist, wobei die Mischeinrichtung (7) der Salzereinrichtung (8) Salz empfangend direkt nachgeordnet ist oder wobei die Salzereinrichtung (8) zur Salzzuführung in die Mischeinrichtung (7) über die Käsebruchzerkleinerungseinrichtung (6) ausgebildet und/oder angeordnet ist.

7. Vorrichtung (1) nach einem der Ansprüche 2 bis 6, **dadurch gekennzeichnet, dass** die Käsebruchzerkleinerungseinrichtung (6) ein Käsebruchzerkleinerungswerkzeug (11) aufweist, wobei das Käsebruchzerkleinerungswerkzeug (11) bevorzugt wenigstens eine Schredderwalze, ein Schredderwalzenpaar, eine Stachelwalze, ein Stachelwalzenpaar, eine Messerwalze, ein Messerwalzenpaar und/oder ein Messerschneidwerk mit einer Rotationsklinge und/oder einer statischen Klinge und/oder einem Messerraster aufweist.

8. Vorrichtung (1) nach einem der Ansprüche 3 bis 7, **dadurch gekennzeichnet, dass** die Mischeinrichtung (7) eine Mischtrommel (13) und ein Mischwerkzeug (14) aufweist, wobei die Mischtrommel (13) und/oder das Mischwerkzeug (14) bevorzugt um eine gemeinsame Rotationsachse (A) rotierbar sind.

9. Vorrichtung (1) nach Anspruch 10 oder 11, **dadurch gekennzeichnet, dass** die Mischtrommel (13) eine Öffnung (15) aufweist, wobei das Cheddarmodul (4) ausgebildet ist, die Mischtrommel (13) um die Rotationsachse (A) in eine Mehrzahl unterschiedlicher Betriebsstellungen (O1, O2, O3) zu drehen, insbesondere um die Mischtrommel (13) wahlweise in eine Käsebruchaufnahmeposition (O1), in der die Öffnung (15) zur Käsebruchzerkleinerungseinrichtung (6) weist, und/oder in eine Salzaufnahmeposition (O3), in der die Öffnung (15) zur Salzereinrichtung (8) weist oder zur Aufnahme von Salz von der Salzereinrichtung (8) orientiert ist, und/oder in eine Käsebruchabgabeposition (02), in der die Öffnung (15) in die Schwerkraftrichtung (S) weist, anzuordnen und/oder zu positionieren.

10. Vorrichtung (1) nach einem der vorstehenden Ansprüche, **dadurch gekennzeichnet, dass** die Ausgabeeinrichtung (3) dazu ausgebildet ist, wenigstens eine Käseform (2) und/oder eine Kassettenform (21) und/oder eine Aufnahmekassette, insbesondere mit mehreren Käseformen (20), in der Schwerkraftrichtung (S) zumindest abschnittsweise vor dem Cheddarmodul (4) anzuordnen und den gepressten Käsebruch bevorzugt in die Käsebruchzerkleinerungseinrichtung (6) auszuleeren, insbesondere durch eine Schwenkbewegung.

11. Vorrichtung (1) nach einem der vorstehenden Ansprüche, **dadurch gekennzeichnet, dass** die Ausgabeeinrichtung (3) dazu ausgebildet ist, eine Käseform (20) und/oder eine Kassettenform (21) und/oder eine Aufnahmekassette in der Schwerkraftrichtung (S) zumindest abschnittsweise hinter dem Cheddarmodul (4) anzuordnen, um Käsebruch, nachdem der Käsebruch im Cheddarmodul (4) verarbeitet wurde, wieder in der jeweiligen Käseform (20) und/oder Kassettenform (21) und/oder Aufnahmekassette aufzunehmen oder in diese fallen zu lassen.

12. Vorrichtung (1) nach einem der vorstehenden Ansprüche, **dadurch gekennzeichnet, dass** die Ausgabeeinrichtung (3) dazu ausgebildet ist, eine Käseform (20) und/oder eine Kassettenform (21) und/oder eine Aufnahmekassette nach dem erneuten Befüllen mit durch das Cheddarmodul (4) bearbeiteten Käsebruch in der Käsebruchpressvorrichtung (2) anzuordnen, insbesondere für ein erneutes Pressen des Käsebruchs und/oder für ein Fertigpressen des Käsebruchs.

13. Vorrichtung (1) nach einem der vorstehenden Ansprüche, **dadurch gekennzeichnet, dass** das Cheddarmodul (4) eine Mehrzahl von Modulsegmenten (M1, M2, M3... Mn) aufweist, wobei die Modulsegmente (M1, M2, M3... Mn) bevorzugt reihenförmig angeordnet sind und/oder wobei sich die Modulsegmente (M1, M2, M3... Mn) bevorzugt entlang einer Breite der Käsebruchpressvorrichtung (2) und/oder entlang einer Wannenbreite der Käsebruchpressvorrichtung (2) erstrecken und/oder wobei die Modulsegmente (M1, M2, M3... Mn) bevorzugt entsprechend einer Reihenanordnung von Käseformen (20), insbesondere einer Kassettenform (21), und/oder einer Aufnahmekassette ausgebildet und/oder angeordnet und/oder anordnenbar sind, insbesondere betreffend die Anzahl und/oder den Abstand der Modulsegmente(M1, M2, M3... Mn).

14. Cheddarmodul (4) zur Verarbeitung von gepresstem Käsebruch, insbesondere für eine Vorrichtung zur Käseherstellung mit einer Käsebruchpressvorrichtung (2) zum flüssigkeitsverringernden Pressen von Käsebruch und mit einer Ausgabeeinrichtung (3) zur Ausgabe von gepresstem Käsebruch aus der Käsebruchpressvorrichtung (2), wobei das Cheddarmodul (4) eine Käsebruchzerkleinerungseinrichtung (6) und/oder eine Mischeinrichtung (7) zum Mischen von Käsebruch und/oder eine Salzereinrichtung (8) für die Zuführung von Salz in aufgenommenen Käsebruch aufweist, wobei zumindest die Käsebruchzerkleinerungseinrichtung (6) zur Anordnung nachgeordnet einer Ausgabeeinrichtung (3) für gepressten Käsebruch und/oder nachgeordnet an einer Käsebruchpressvorrichtung (2) ausgebildet ist.

15. Verfahren (30) zur Käseherstellung, insbesondere mit einer Vorrichtung (1) zur Käseherstellung nach einem der vorstehenden Ansprüche 1 bis 22, bei dem mit einer Käsebruchpressvorrichtung (2) ein flüssigkeitsverringerndes Pressen von Käsebruch erfolgt, bei dem gepresster Käsebruch mit einer Ausgabeeinrichtung (2) aus der Käsebruchpressvorrichtung (2) entnommen(31), an ein Cheddarmodul (4) ausgegeben (32) und durch das Cheddarmodul (4) verarbeitet (33) wird.
